(19) Europäisches Patentamt
European Patent Office
Office européen des brevets

(11) **EP 1 895 732 A1**

(12) **EUROPEAN PATENT APPLICATION**

(43) Date of publication:
**05.03.2008 Bulletin 2008/10**

(51) Int Cl.:
*H04L 27/26* (2006.01)      *H04L 1/00* (2006.01)

(21) Application number: **06119771.1**

(22) Date of filing: **30.08.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Jacobs University Bremen gGmbH 28759 Bremen (DE)**

(72) Inventors:
• **Henkel, Werner**
  **28832 Achim (DE)**
• **Khaled, Hassan**
  **28719 Bremen (DE)**

(54) **Unequal-error protection bit loading for multi-carrier transmission**

(57)      Data, especially when it is source-coded multimedia information (video, speech, audio), often should be protected differently, since the effects of errors would lead to disturbances of different susceptibility. Thus, unequal error protection (UEP) should be provided by the physical transport. Multicarrier modulation (DMT: Discrete MultiTone, OFDM: Orthogonal Frequency Division Multiplex) allows to implement unequal error protection already when allocating the bits (signal alphabets) to the carriers. UEP coding is a well-known alternative, which may be additionally used. Implementing it in multicarrier transmission is a very low-complex and efficient realization. The solution in this application allows to arbitrarily select the number of bits in the different protection classes with arbitrary spacing in the signal-noise ratio margin or, equivalently, with an arbitrary separation in bit-error ratios. The invention includes an SNR sorting scheme ensuring robustness in the sense that high-protected bits will still be better protected even under non-stationary noise. The bit-allocation can also be allowed to be mixed with bits from different protection classes leading to hierarchical modulation schemes.

Figure 8:

EP 1 895 732 A1

**Description**

The invention relates to a method for the transmission of data of different sensitivity in accordance with Claim 1. It realized unequal error protection (UEP) already in the physical layer, i.e., in the transmission method. We especially concentrate on multicarrier transmission in the form of DMT (Discrete MultiTone) or OFDM (Orthogonal Frequency Division Multiplex). In accordance with Claim 14, the unequal-protection bit loading can also be applied to other channel scenarios, e.g., in the form of space-time, space-frequency, space-time-frequency; and MIMO (multiple-input multiple-output) constellations.

Usually, coding is applied to realize unequal error protection properties, e.g., like in Hagenauer, J., "Rate-Compatible Punctured Convolutional Codes (RCPC Codes) and their Applications," IEEE Trans. on Comm., Vol. 36, No. 4, April 1988, pp. 389-400. As far as modulation itself is concerned, so-called hierarchical schemes have been proposed to realize UEP, like in the DVB-T standards ETS 300 744. We do not pursue these approaches here, except for the case that a possible mixed bit-allocation leads to hierarchical modulation formats.

In multicarrier modulation, especially, when the channel is not changing too rapidly, the signal-to-noise ratio (SNR) can be measured and a reverse channel (if available) can be used to adapt the signal alphabets to the corresponding SNR. This process is called bit allocation (or adaptive modulation). Several algorithms have been proposed so far, which do not realize any unequal error protection. The most important are:

1. Hughes-Hartogs alg.: This is a greedy algorithms which allocates bits step by step at those carriers that require the least power for the increase in bit load. (Hughes-Hartogs, D., Ensemble Modem Structure for Imperfect Transmission Media, U.S. Patents, Nos. 4,679,227 (July 1987); 4,731,816 (March, 1988); and 4,833,706 (May 1989))

2. Campello alg.: This is a lower complex alternative to Hughes-Hartogs applying some carrier grouping. (Campello, J., Practical Bit Loading for DMT, proc. ICC, Vancouver, 1999, pp. 801-805)

3. Chow-Cioffi-Bingham alg.: It uses Shannon's capacity formula adding a margin factor to the SNR, thereby iteratively adjusting the individual and the sum rates until the required rate is reached. (Chow, P.S., Cioffi, J.M., Bingham, J.A.C., A practical discrete multitone transceiver loading algorithm for data transmission over spectrally shaped channels, IEEE Transactions on Communications, Vol. 43, No. 234, Feb-Mar-Apr 1995, pp. 773 - 775)

4. Huber-Fischer alg.: A loading algorithm based on the symbol error rate, leading to similar expressions as the previous one. However, the iteration modifies the number of used carriers and has no margin modification. (Fischer, R.F.H., Huber, J.B., A New loading Algorithm for Discrete Multitone Transmission, proc. Globecom 1996, vol. 1, Nov. 18-22, 1996, pp. 724 - 728)

5. George-Amrani alg.: This is a greedy algorithm placing bits where it increases the overall bit- or symbol-error rate least. (George, Y., Amrani, O., Bit loading algorithms for OFDW, proc. ISIT 2004, June 27, - July 2, 2004, p. 391)

For describing the concept of this invention, we concentrate on the algorithm by Chow et al., modifying it such that it will obtain UEP properties.

To realize the said UEP properties, different noise margins according to Claim 1 are considered devoted to each priority class, assuming noise margin separations $\Delta\gamma_j$ between the required $N_g$ protection levels. These steps allow the symbol-error rate (SER) curves to be exactly spaced by the same $\Delta\gamma_j$ according to Claim 1.

In the UEP bit-loading algorithm, it is required to fulfill a total target bit-rate $B_T$ and individual target bit-rates $T_j$ for each priority class $j$. This defines the algorithm to solve a bit-rate maximization problem (BRMP), which is defined as follows

$$\max_{b \in Z} \left\{ B_{\text{tot}} = \sum_{k=0}^{N-1} b_k \right\} \qquad (1)$$

subject to

$$\sum_{k=0}^{N-1} P_k(b_k) < P_T \ , \qquad\qquad (2)$$

where $B_{\text{tot}}$ is the total number of loaded bits, $P_k$ is the power of the $k^{th}$ subcarrier that is loaded with $b_k$ bits, and $N$ is the number of subcarriers. The BRMP may be converted other problems as follows:

**the designed symbol-error rate is exceeded:** the algorithm may reduce the number of bits to achieve a lower SER. This changes the algorithm to be a probability of error minimization problem (PEMP).

**the achieved probability of error is less than the designed value:** the algorithm is re-iterated to reduce the power until the SER is achieved, keeping the number of bits constant. This is equivalent to a power minimization problem (PMP).

The invention according to claims 1 and 2 can be regarded as a generalization of the algorithm by Chow et al.. It computes the bit-load based on Shannon's capacity formula by introducing different noise margins $\gamma_j$ for the $N_g$ groups. $\gamma_j$ is computed iteratively to fulfill the required number of bits $T_j$ for the set of subcarriers $M_j$. The power $P_k$ is allocated based on the SER of class $j$ and the number of bits in each subcarrier $k$. It is also assumed that one requires more important frames to exactly fulfill the required rate, while the least important frame is allowed to vary slightly in order to exactly fulfill the total target rate.

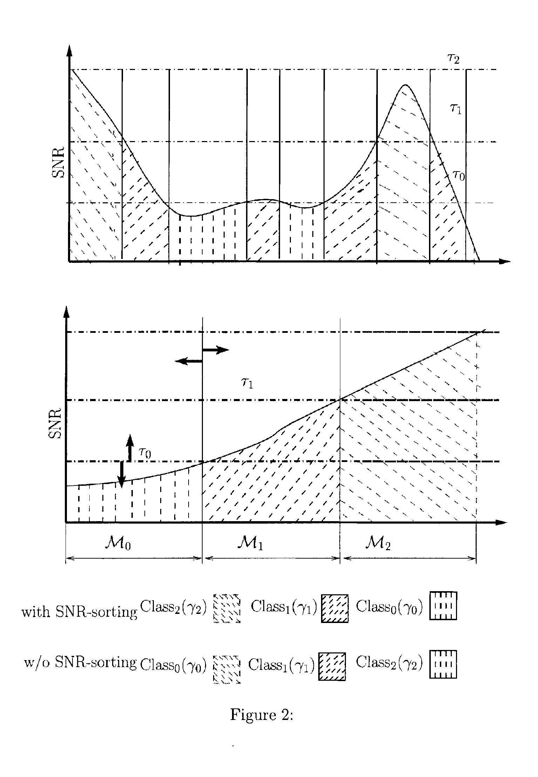

In order to realize UEP classes, SNR ranges have to be allocated to the required $N_g$ protection levels. This can be achieved by setting hypothetical SNR thresholds $\tau_j$, where the UEP requirements are fulfilled by modifying these thresholds, thereby changing the number of subcarriers for each class. Figure 2 models a special case of three classes of protections (Class$_0$, Class$_1$, and Class$_2$), where Class$_0$ is the highest protected class. The upper graph in Fig. 2 shows the original measured SNRs over the carrier indices, whereas the lower graph shows reordered carriers with their SNRs after SNR sorting according to claims 4 and 7. The arrows added in the lower graph symbolize the movements of border lines according to claims 7 and the special realizations according to claims 10, 11. A horizontal movement in the ordered (lower) graph corresponds at the same time to a corresponding vertical movement in SNR direction, which would be the same in the upper graph.

Instead of introducing SNR thresholds to allocate carriers to certain protection classes, according to claims 4, 5, 6 the carriers may be sorted according to their signal-to-noise ratios (" SNR sorting"). Figure 2 shows such thresholds devoting carriers to protection classes. After SNR sorting according to claims 4 and 7 these thresholds represent thresholds at carrier numbers. The invention reaches the required bit load $T_j$ per class $j$ up to some tolerance which is usually determined by the bit-load of the carriers near the borderline. In a typical embodiment of the invention, one would choose the tolerances such that the number of bits will only be decreased in the low-priority class, achieving better protection for some bits, moved to better classes by the borderline shift.

Up to now, there is only one UEP bit-allocation approach by Yu, F., Willson, A., A DMT transceiver loading algorithm for data transmission with unequal priority over band-limited channels, proc. Signals, Systems, and Computers, 1999, Pacific Grove, CA, USA, Vol. 1, Oct. 24-27, 1999, pp. 685 - 689, generalizing the alg. by Fischer et al., not taking into account SNR sorting in the way described in said Claim 4, but rather follows the opposite order, allocating high-priority bits to high signal-to-noise ratios.

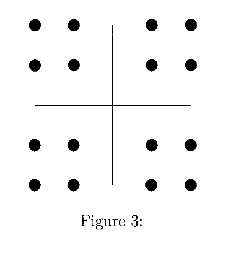

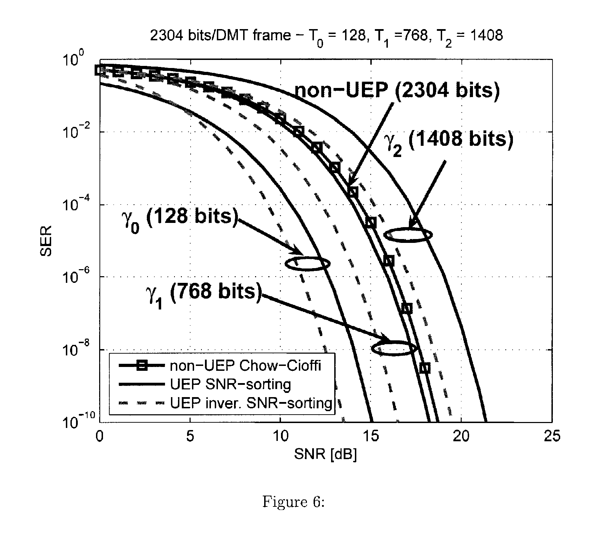

The said SNR sorting according to Claim 4 has relations, but still differs from the so-called Tone Ordering in the ADSL (e.g., ITU-T G.992.1) and VDSL (e.g., ETSI TS 101270-2) standards patented in the United States Patent 5,596,604, Cioffi et al., Multicarrier modulation transmission system with variable delay, Jan. 21, 1997. In Tone-Ordering, the difference in protection is provided by two differently encoded channels, e.g., in ADSL a high and low latency path (slow and fast channels, respectively), with or without an interleaver, respectively. The data on carriers with low signal-to-noise ratios are routed through the low-latency channel and correspondingly, the data on carriers with high signal-to-noise ratios are passed through the high-latency channel. The idea is that the better error correction mechanism should be in place for data that is located on carriers with originally high signal-to-noise ratios, since non-stationary channel variations will change the signal-to-noise ratio dramatically at those carriers. Carriers with originally low signal-to-noise ratio will not see a dramatic change. This Tone Ordering was not intended to allocate data of different sensitivity to carriers. Our SNR Sorting is such an allocation scheme. According to claims 5 and 6, we further allow mixed loading of carriers, which allows to place low-priority data additionally on carriers with low signal-to-noise ratios, since otherwise, some of those carriers would not be used at all or not efficiently used. Putting data of different priority with different margin and bit-error rate requirements onto one carrier will lead to hierarchical modulation schemes like the one shown in Fig. 3. Inside clouds points are addressed by the low-priority bits, whereas the clouds themselves are selected by the high-priority bits. The SNR Sorting according to claims 4, 5, 6 ensures that even under adverse non-stationary channel conditions the priority order of data is usually preserved, i.e., high-priority data is still more protected that low-priority data. In a purely stationary environment, however, SNR sorting according to Claim 4 without the mixed loading according to claims 5 and 6 will be a little less efficient. However, in an environment with impulse noise or fading, a robust sorting scheme together with UEP bit loading according to claims 4, 5, possible additionally applying Claim 6 is essential to keep the most sensitive data still best protected. Figure 6 shows results for bit-error rate curves of 3 different protection classes intended to be spaced by 3 dB. When the sorting according to Claim 4 is not applied, the 3 performance curves even turn around under impulse noise, i.e., the intended best protected data will be worst protected.

The invention is based on the earlier non-UEP bit-loading algorithm by Chow et al. already mentioned, which uses a slightly modified Shannon capacity formula to determine the bit-load on every carrier. In there, the SNR is multiplied by a margin that is modified iteratively, until the desired overall data rate is reached. If after a number of iterations, the rate is still not obtained; other measures are taken which add or remove bits step by step according to the quantization error when quantizing the bit-load from the capacity formula to the integers values (m) that are only possible for signal constellations of a size $M = 2^m$.

Thus, the invention according to claims 1 to 3 uses different margins $\gamma_j$ for the different priority (protection) classes. Hence, the algorithm uses the rate relation

$$b_{k,j} = \log_2\left(1 + \frac{\mathrm{SNR}_{k,j}}{\gamma_j}\right)$$

$$\hat{b}_{k,j} = \begin{cases} \lfloor b_{k,j} + 0.5 \rfloor, & \text{if } b_{k,j} \le b_{max} \\ b_{max}, & \text{if } b_{k,j} > b_{max} \end{cases}$$

$$\Delta b_{k,j} = b_{k,j} - \hat{b}_{k,j} , \qquad (3)$$

where $b_{k,j}$ is the bit rate for the $k^{th}$ carrier in the $j^{th}$ priority class, such that, e.g., $j \in [0,..., N_g - 1]$ would correspond to $N_g$ protection levels. $\gamma_j$ is fixed for a set of carriers $k \in M_j$. The number of bits, $b_{k,j}$ are rounded (truncated) to the nearest integer $\hat{b}_{k,j}$, where $\Delta b_{k,j}$ is the 'quantization error', and $b_{max}$ are the maximum allowed bits per subcarrier. Each group is composed of a certain number of bits $T_j$ such that the total target bit-rate is given by

$$B_T = \sum_{j=0}^{N_g-1} T_j . \qquad (4)$$

The margin steps $\Delta\gamma_j$ between the $N_g$ groups will usually be considered to be constant, which means that it suffices to compute $\gamma_0$ and the others will just be related according to the spacing $\Delta\gamma_j$. The same relation is still obvious, if we generalize to variable step sizes.

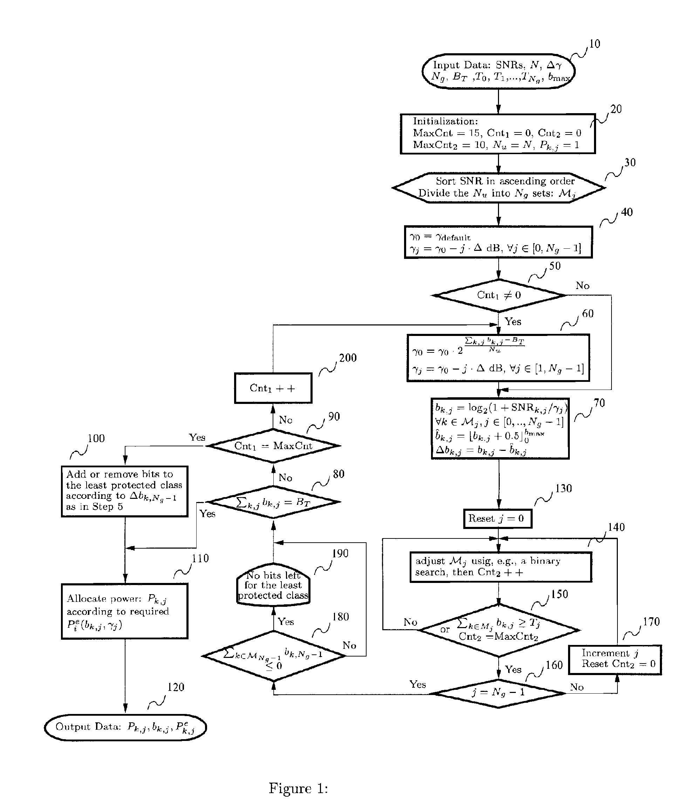

Figure 1 depicts a possible algorithm flowchart, without including the modification according to claims 5 and 6 and specializing to a binary search of the region limits according to Claim 11 instead of the linear search according to Claim 10.

The complete algorithm is the following:

10 and 20 show the initialization of the algorithm. 30 the optional SNR sorting according to Claim 4, which may be modified following claims 5 and 6. Counters $Cnt_1$ and $Cnt_2$ together with their allowed maxima, MaxCnt and WaxCnt$_2$, respectively, determine the maximum allowed iterations modifying the global margin according to Claim 8 and the adjustments of border lines to fulfill individual rates according to claims 7, 10, 11.

The outer loop is especially determined by 60, 70, 80, 90, 200 which determine the margin iterations according to Claim 8 and the bit allocation according to the channel capacity (or modifications thereof) according to Claim 1, respectively. $b_{k,j} = \log_2(1 + SNR_{k,j}/\gamma_j)$ determined the bit load of the $k$th carrier in the $j$th class, $\gamma_j$ denoting the margin of the $j$th class, where we usually assume $\gamma_j = \gamma_0 - j \cdot \Delta_\gamma$ [dB] according to Claim 9, i.e., a constant margin separation. $\hat{b}_{k,j}$ is the rounded (integer) result corresponding to $b_{k,j}$ and $\Delta b_{k,j}$ is the quantization error, which is used for the rate-enforcing step 100, if the iterations did not lead to the desired bit-distribution. The margin recalculation in the outer loop is specified

in 60 as $\gamma_0|_{new} = \gamma_0|_{old} \cdot 2^{\frac{B_{tot}-B_T}{N}}$.

If the overall rate is achieved a branching 80 leads to the final power allocation according to Claim 13 using the well-known symbol error ratio equations for given signal alphabets as, e.g., given in J.G. Proakis, Digital Communications, McGraw Hill Higher Education Dec. 1, 2000, solving them for the power for a given error ratio, which may be symbol or bit error ratios. The power for each subcarrier will then appear as a function of the noise power at each subcarrier $N_{k,j}$, the rounded number of bits $\hat{b}_{k,j}$, and the required average error probability $\overline{P}e_M(\gamma_j)$ for the $j^{th}$ class.

An ambodyment of the invention can include a further power normalization according to given power constraints. Another embodiment may provide an outer loop, if the overall bit-error probability requirements have finally not be achieved, reducing the bit-load and reentering the algorithm according to claims 1 to 13. The outer loop is not shown in the flow chart in Fig. 1.

In case the maximum number of outer iterations are achieved, an embodiment of the invention may provide a branching 90 leading to a rate-enforcing step 100. This step is characterized in that the desired total and individual bit counts are enforced by either reducing the bit count at carrier locations where the quantization error $\Delta b_{k,j}$ is small or increasing the bit count at those carrier locations where the quantization error $\Delta b_{k,j}$ is big. Usually, the invention only requires this rate-forcing step for the lowest protected class. The other rates are enforced by the border shifts between carrier ranges according to Claim 7 with possible search procedures according to claims 10 or 11. Other embodiments of the invention may choose other steps, i.e., other successive modifications of the border lines.

The inner iterations modifying borders of carrier ranges corresponding to the different protection classes are determined by 130-170, where the boundaries are successively determined for each class.

180,190 are provided to flag, if no bits have been placed in the last protection class, meaning that these bits have all been better protected than required.

In the sequel, we describe the power allocation 110 in some more detail. The power of each subcarrier is allocated according to the quantized bit loading results. This means that the power mask will not stay perfectly constant as in the equal bit loading scheme. It will rather vary with the number of allocated bits to have a saw-tooth like shape that fluctuates by around 3 dB peak-to-peak with a discontinuity at every bit-allocation step. These fluctuations are around the desired average constant power mask. One may, of course, also decide to leave the power allocation constant and accept for some bit-error ratio variations that will be taken care of by some additional error correcting code.

In order to calculate the power on each subcarrier in order to realize UEP, the following steps have to be considered:

- find the SER as a function of the noise margin of each class $\gamma_j$ and the bit-load $b_{k,j}$

- allocate the power to the average calculated SER, SNR and bit-loading $b_{k,j}$

As in the mentioned text book by Proakis, the symbol-error rate equation of $\sqrt{M}$ ary pulse amplitude modulation (PAM) is

$$\mathcal{P}^e_{\sqrt{M}} = \left(1 - \frac{1}{\sqrt{M}}\right) \text{erfc}\left(\sqrt{\frac{3}{2(M-1)}\frac{\overline{P}_{k,j}}{N_{k,j}}}\right) , \qquad (5)$$

where $M = 2^b{}_{k,j}$. $\overline{P}_{k,j}$ and $N_{k,j}$ are the average signal and noise energies, respectively. Then, for $M$ary QAM

$$\mathcal{P}^e_M = 1 - \left(1 - \mathcal{P}^e_{\sqrt{M}}\right)^2 = 2 \cdot \mathcal{P}^e_{\sqrt{M}} - \mathcal{P}^e_{\sqrt{M}}{}^2 \qquad (6)$$

and from (3), we obtain

$$\text{SNR}_{k,j} = \gamma_j \cdot \left(2^{b_{k,j}} - 1\right) \qquad (7)$$

Using (7) inside (5) and M = $2^{\hat{b}_{k,j}}$ ,

$$\mathcal{P}^e_{\sqrt{M}} = \left(1 - \frac{1}{\sqrt{2^{\hat{b}_{k,j}}}}\right) \mathrm{erfc}\left(\sqrt{\frac{3\gamma_j}{2}}\right) \tag{8}$$

Equations (6) and (8) lead to the symbol-error probability under AWGN as a function of $\gamma_j$ and $\hat{b}_{k,j}$ is

$$\mathcal{P}^e_M(\gamma_j, \hat{b}_{k,j}) = \left(1 - \frac{1}{\sqrt{2^{\hat{b}_{k,j}}}}\right) \mathrm{erfc}\left(\sqrt{\frac{3\gamma_j}{2}}\right) \cdot$$
$$\left[2 - \left(1 - \frac{1}{\sqrt{2^{\hat{b}_{k,j}}}}\right) \mathrm{erfc}\left(\sqrt{\frac{3\gamma_j}{2}}\right)\right] , \tag{9}$$

and the average error probability for each class is given by

$$\overline{\mathcal{P}}^e_M(\gamma_j) = \frac{1}{\Sigma_{\mathcal{M}_j}} \sum_{k \in \mathcal{M}_j} \mathcal{P}^e_M(\gamma_j, \hat{b}_{k,j}) , \tag{10}$$

where $\Sigma_{Mj}$ is summation of all non-zero subcarriers in the set $M_j$.

As in Yu et al., the power allocation, as a function of $\overline{P}^e_M(\gamma_j)$, is given by

$$P_{k,j} = \frac{2N_k(2^{\hat{b}_{k,j}} - 1)}{3} \cdot \left[\mathrm{erfc}^{-1}\left(\frac{\overline{\mathcal{P}}^e_M(\gamma_j)\sqrt{2^{\hat{b}_{k,j}}}}{2\left(\sqrt{2^{\hat{b}_{k,j}}} - 1\right)}\right)\right]^2 , \tag{11}$$

where $P_{k,j}$ and $N_k$ are the signal power and noise energy, respectively.

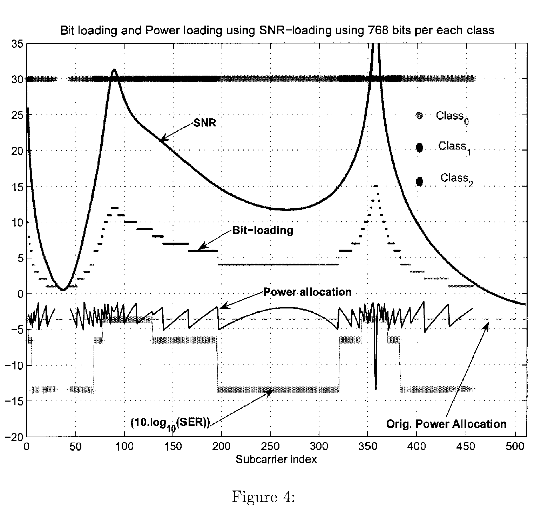

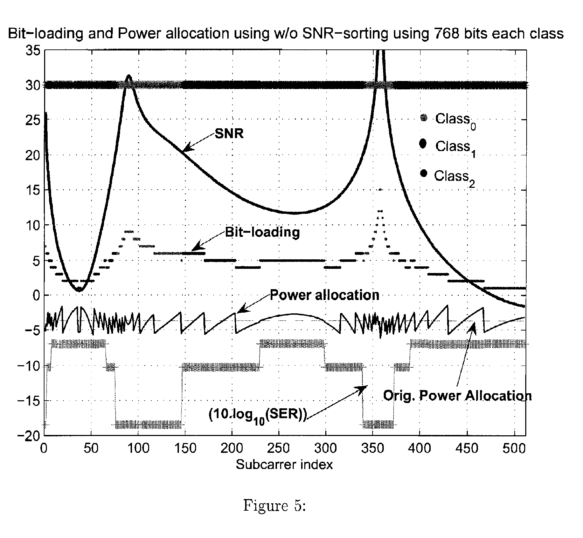

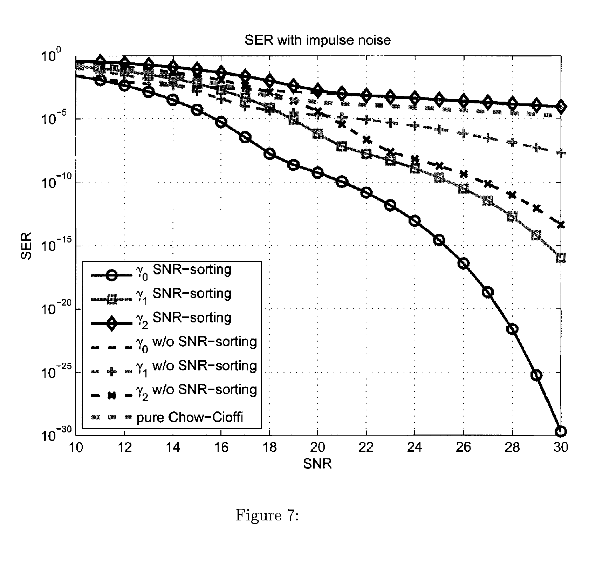

We add some figures showing some results. Figure 4 shows an exemplary bit loading how it relates to the signal-to-noise ratio applying SNR sorting according to Claim 4, Fig. 5 shows the corresponding result when inverse sorting contradicting Claim 4 would be used. Fig. 6 shows the spacing of SNR curves realized by the invention. A curve that would result from a non-UEP bit loading (Chow et al. alg.) is added as a reference. An example for bit-error rate curves in the case of non-stationary impulse noise added after bit-allocation is shown in Fig. 7. All the curves show worse performance, but SNR sorting according to Claim 4 preserves the order of the protection, whereas it is lost if carriers are ordered in the opposite direction as proposed in Yu et al.. Also the non-UEP scheme shows quite bad performance. Fig. 6 shows that there will be a certain loss in a purely stationary environment when applying SNR sorting according to Claim 4. Claims 5 and 6 may be used to improve the efficiency.

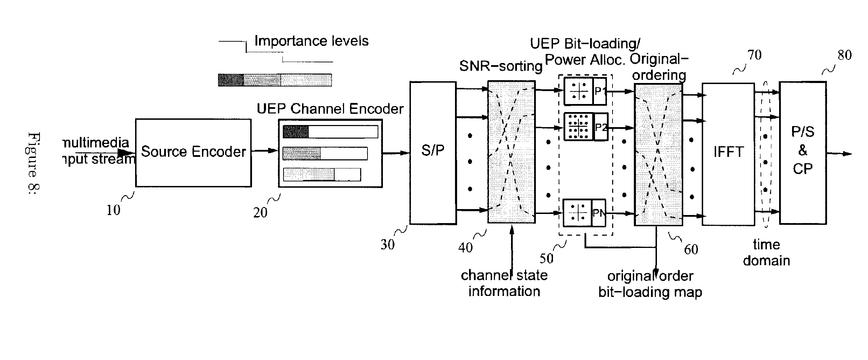

The possible transmit-sided apparatus according to claims 15 and 16 is shown in Fig. 8. A source encoder 10 is considered as the source of data of different importance, which can, of course, also be delivered from other sources. A channel encoder 20 may follow, which may even be realized as an unequal error protecting encoder. A serial-parallel converter 30 feeds the sorting block 40 reordering the data following the SNR sorting according to claims 4 to 7. The bit-to-symbol mapping 50 according to Claim 17 using the bit-load defined by the UEP bit-loading method according to claims 1 to 2 is next, followed by an inverse sorting to put the carriers into the right order again. An IFFT 70 delivers the time-domain signal to be transmitted after parallel-to-serial conversion 80. The bit-to-sympol mapper according to Claim 17 requires for a corresponding symbol-to-bit demapper according to Claim 18 at the receiver using the same symbol alphabet defined by the UEP bit-loading method as herein described.

According to Claim 15, in order to be able to perform a bit-allocation, also the herein described UEP bit-loading, a reverse channel (duplex) is required to communicate either the signal-to-noise ratios or the resulting bit-allocation.

The signal according to Claim 19 resulting from the UEP bit allcation process will follow the discrete signal alphabets resulting from the herin described UEP bit-allocation process when analyzing it with a DFT (FFT).

All or parts of the operations of the herein described bit-allocation and mapping may also be realized by a computer program according to Claim 20.

**Claims**

1. Method for unequal-error protection bit loading for multicarrier transmission to adapt the error probability and the signal-to-noise ratio margin to requirements and the sensitivity of the data, especially source-encoded data, e.g., coming from a video or audio encoder, using a bit-allocation algorithm, where different margins and margin separations corresponding to different bit-error ratios modify the number of bits and selecting the modulation alphabet (signal constellation) such that the signal-to-noise ratios will show these chosen margin separations for the bits of different sensitivities and **characterized in that** the channel capacity or approximations thereof are used for determining the bit load modifying the signal-to-noise ratio by the said different margins with a predefined margin separation such that the corresponding bit-error ratios relative to the signal-to-noise ratio will show these predefined margin separations.

2. Method for unequal error protection bit loading according to Claim 1, **characterized in that** the bit number results from quantizing (e.g. rounding) the real bit load of the $k$th carrier in the $j$th protection call $b_{k,j}$ to an integer $\hat{b}_{k,j}$ with a quantization error $\Delta b_{k,j} = b_{k,j} - \hat{b}_{k,j}$.

3. Method for unequal error protection bit loading according to Claim 1, **characterized in that** the data is subdivided into sensitivity classes $M_j$ and the carriers are sorted according to the signal-to-noise ratios at these carrier frequencies and the carrier groups belonging to a certain protection class are specified as consecutive entries in this sorted carrier list, where this ordering and grouping is equivalent to introducing thresholds in the signal-to-noise ratio where the number of thresholds is one less than the number of different sensitivity classes.

4. Method for unequal error protection bit loading **characterized in that** SNR margins are allocated to the carrier groups such that they decrease with the signal-to-noise ratio, i.e., the higher the signal-to-noise ratio, the lower the chosen margin moving the most sensitive data to the carriers with the worst signal-to-noise ratio.

5. Method for unequal error protection bit loading according to claims 1 to 4, **characterized in that** non-used carriers at low signal-to-noise ratios may be used for bits from lower protection classes.

6. Method for unequal error protection bit loading according to claims 1 to 5, **characterized in that** carriers for high-priority data may additionally be used for lower-priority data, when power and error rates allow for this additional use, which will lead to hierarchical modulation schemes where the lower-priority data address points within signal point aggregations, so-called clouds, and the high priority bits address the clouds itself.

7. Method for unequal error protection bit loading according to claims 1 to 6, **characterized in that** the separation lines between carrier groups; after optional sorting according to claims 4 to 6, are modified such that the number of bits per protection class $M_j$ reaches a desired number of bits per class $T_j$ up to some tolerance, which is equivalent to introducing separation lines in the SNR with or without sorting the carriers.

8. Method for unequal error protection bit loading according to Claim 1, **characterized in that** the margins are modified iteratively to match the overall desired bit load.

9. Method for unequal error protection bit loading according to Claim 1, **characterized in that** the margin separations are kept unchanged and only the absolute values will be changed iteratively.

10. Method for unequal error protection bit loading according to claims 1 to 3, **characterized in that** the said carrier grouping is modified by stepwise shifts of the border lines between consecutive groups.

11. Method for unequal error protection bit loading according to claims 1 to 3, **characterized in that** the said carrier grouping is modified following a binary search, stepwise halving carrier groups, investigating for each step, if the required number of bits better approaches the desired number.

12. Method for unequal error protection bit loading according to claims 1 to 3, and claims 10 and 11, **characterized in that** the shifts of border lines is starting from the highest priority class.

**13.** Method for unequal error protection bit loading according to claims 1 to 3, **characterized in that** the final power allocation is performed according to the desired bit-error rates per protection class which can be computed corresponding to the chosen margins.

**14.** Method for unequal error protection bit loading according to claims 1 to 13, **characterized in that** the bit-loading is not performed over channels represented by the different carriers of a multicarrier system, but alternatively or additionally over spacial or temporal channels, including space-time, space-frequency, space-time-frequency, and MIMO (multiple-input multiple-output) systems.

**15.** Apparatus for unequal error protection bit loading according to claims 1 to 14, **characterized in that** the UEP bit loading is performed at the transmitter on the basis of signal-to-noise ratios measured at the receiver requiring a duplex transmission channel and a demapping or decoding at the receiver according to the signal alphabet resulting from the UEP bit loading process.

**16.** Apparatus for unequal error protection bit loading adapted for carrying out a method according to any one of claims 1 to 14.

**17.** Mapper to realize the signal mapping at the transmitter according to the unequal error protection bit loading as herein described.

**18.** Demapper to realize the signal demapping at the receiver according to the unequal error protection bit loading as herein described.

**19.** Signal which has been generated using the unequal error protection bit-allocation as herein described.

**20.** Computer program comprising program code means for causing a computer to perform the steps of one of the methods as claimed in any of the claims 1 to Claim 15 when said computer program is carried out on a computer.

Figure 1:

with SNR-sorting Class$_2$($\gamma_2$) [ ] Class$_1$($\gamma_1$) [ ] Class$_0$($\gamma_0$) [ ]

w/o SNR-sorting Class$_0$($\gamma_0$) [ ] Class$_1$($\gamma_1$) [ ] Class$_2$($\gamma_2$) [ ]

Figure 2:

Figure 3:

Figure 4:

Figure 5:

Figure 6:

Figure 7:

Figure 8:

**European Patent Office**

**EUROPEAN SEARCH REPORT**

Application Number

EP 06 11 9771

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 753 948 A1 (ALCATEL BELL NV [BE] CIT ALCATEL [FR]) 15 January 1997 (1997-01-15) <br> * abstract; claims 1-10; figures 1,2 * <br> * page 2, line 6 - line 28 * <br> * page 3, line 14 - line 46 * <br> * page 5, line 20 - page 7, line 53 * <br> * page 8, line 11 - line 15 * <br> ----- | 1-20 | INV. <br> H04L27/26 <br><br> ADD. <br> H04L1/00 |
| X | DARDARI D ET AL: "MPEG-4 video transmission in the 5GHz band through an adaptive ofdm wireless scheme" <br> 13TH IEEE INTERNATIONAL SYMPOSIUM ON PERSONAL, INDOOR AND MOBILE RADIO COMMUNICATIONS, <br> vol. 4, 15 September 2002 (2002-09-15), pages 1680-1684, XP010611552 <br> IEEE: PISCATAWAY, NJ, USA <br> ISBN: 0-7803-7589-0 <br> * abstract * <br> sections I,III,VI <br> ----- | 1-20 | |
| X | ZHENG H, LIU K J R: "Power Minimization for Delivering Integrated Multimedia Services over Digital Subscriber Line" <br> IEEE JOURNAL ON SELECTED AREAS IN COMMUNICATIONS, <br> vol. 18, no. 6, June 2000 (2000-06), XP011055156 <br> IEEE SERVICE CENTER: PISCATAWAY, US <br> ISSN: 0733-8716 <br> * abstract; figures 2,3 * <br> sections I,III,IV,VI <br> ----- <br> -/-- | 1-20 | TECHNICAL FIELDS SEARCHED (IPC) <br><br> H04L <br> H03M |

The present search report has been drawn up for all claims

| Place of search | Date of completion of the search | Examiner |
|---|---|---|
| The Hague | 17 January 2007 | Faber, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 06 11 9771

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 6 128 348 A (KAO C [US] ET AL) 3 October 2000 (2000-10-03) * abstract * * column 6, line 9 - line 13 * * column 7, line 10 - line 53 * * column 11, line 33 - column 15, line 36 * * column 16, line 1 - line 10 * * column 17, line 38 - column 19, line 65 * ----- | 1-20 | |
| A | US 5 479 447 A (CHOW P S [US], CIOFFI J M [US]) 26 December 1995 (1995-12-26) * abstract; claims 13,16; figures 7-9 * * column 7, line 11 - column 9, line 49 * ----- | 1-20 | |
| A | US 2002/118772 A1 (LIN J [US]) 29 August 2002 (2002-08-29) * abstract; figures 2,6 * * paragraph [0003] - paragraph [0009] * * paragraph [0022] - paragraph [0030] * * paragraph [0046] - paragraph [0055] * ----- | 1-20 | TECHNICAL FIELDS SEARCHED (IPC) |
| A | WO 98/57472 A (AWARE INC [US]) 17 December 1998 (1998-12-17) * abstract; figure 5 * * page 4, line 9 - page 5, line 15 * * page 7, line 10 - line 15 * * page 9, line 7 - page 12, line 24 * ----- | 1-20 | |

The present search report has been drawn up for all claims

| Place of search | Date of completion of the search | Examiner |
|---|---|---|
| The Hague | 17 January 2007 | Faber, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 06 11 9771

This annex lists the patent family members relating to the patent documents cited in the above-mentioned European search report.
The members are as contained in the European Patent Office EDP file on
The European Patent Office is in no way liable for these particulars which are merely given for the purpose of information.

17-01-2007

| Patent document cited in search report | | | Publication date | Patent family member(s) | | | Publication date |
|---|---|---|---|---|---|---|---|
| EP 0753948 | A1 | | 15-01-1997 | AU | 714973 | B2 | 13-01-2000 |
| | | | | AU | 5832896 | A | 23-01-1997 |
| | | | | CA | 2180972 | A1 | 12-01-1997 |
| | | | | IL | 118677 | A | 22-09-1999 |
| | | | | US | 5790550 | A | 04-08-1998 |
| US 6128348 | A | | 03-10-2000 | NONE | | | |
| US 5479447 | A | | 26-12-1995 | NONE | | | |
| US 2002118772 | A1 | | 29-08-2002 | US | 2006176964 | A1 | 10-08-2006 |
| WO 9857472 | A | | 17-12-1998 | AU | 740221 | B2 | 01-11-2001 |
| | | | | AU | 7827398 | A | 30-12-1998 |
| | | | | CA | 2293239 | A1 | 17-12-1998 |
| | | | | EP | 1013043 | A1 | 28-06-2000 |
| | | | | JP | 2002504283 | T | 05-02-2002 |
| | | | | US | 6072779 | A | 06-06-2000 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4679227 A
- US 4731816 A
- US 4833706 A
- US 5596604 A, Cioffi

**Non-patent literature cited in the description**

- **HAGENAUER, J.** Rate-Compatible Punctured Convolutional Codes (RCPC Codes) and their Applications. *IEEE Trans. on Comm.,* April 1988, vol. 36 (4), 389-400
- **CAMPELLO, J.** Practical Bit Loading for DMT, proc. ICC. 1999, 801-805
- **CHOW, P.S ; CIOFFI, J.M ; BINGHAM, J.A.C.** A practical discrete multitone transceiver loading algorithm for data transmission over spectrally shaped channels. *IEEE Transactions on Communications,* February 1995, vol. 43 (234), 773-775
- **FISCHER, R.F.H ; HUBER, J.B.** *A New loading Algorithm for Discrete Multitone Transmission, proc. Globecom 1996,* 18 November 1996, vol. 1, 724-728
- **GEORGE, Y ; AMRANI, O.** *Bit loading algorithms for OFDW, proc. ISIT,* 27 June 2004, 391
- **YU, F ; WILLSON, A.** A DMT transceiver loading algorithm for data transmission with unequal priority over band-limited channels. *proc. Signals, Systems, and Computers, 1999,* 24 October 1999, vol. 1, 685-689
- **J.G. PROAKIS.** Digital Communications. McGraw Hill, 01 December 2000